# EUROPÄISCHE PATENTANMELDUNG

(11) **EP 2 034 382 A2**
(43) Veröffentlichungstag der Anmeldung: **11.03.2009**
(21) Anmeldenummer: 08105218.5
(22) Anmeldetag: 03.09.2008
(51) Int. Cl.: G05G 1/10, G05G 5/03

(54) **Drehsteller**

(30) Priorität: 05.09.2007 DE 102007042112
(71) Anmelder: Continental Automotive GmbH, 30165 Hannover (DE)
(72) Erfinder: Beck, Andreas, 65620, Waldbrunn (DE); Heimberger, Hans-Dieter, 61440, Oberursel (DE); Santarossa, Bruno, 72227, Egenhausen (DE)

(57) **Zusammenfassung**

Die Erfindung bezieht sich auf einen Drehsteller für elektrische oder elektronische Geräte in einem Kraftfahrzeug mit einem gegenüber feststehenden Gehäuseteilen manuell drehbar antreibbaren Stellelement 1, durch das ein ringartiges Rastkonturenelement mit einer alternierend Rasterhebungen und Rastvertiefungen ausweisenden Rastkontur 11 drehbar antreibbar ist, in die ein Rastelement mit federnder Vorspannung eingreift. Es sind zwei oder mehrere drehbar antreibbare Rastkonturenelemente vorhanden, in deren Rastkonturen 11, 13 die Rastelemente eingreifen, wobei die Rastkonturenelemente über ein oder mehrere schaltbare Getriebe abhängig von der Schaltstellung des Getriebes drehbar antreibbar sind.

## Beschreibung

Die Erfindung bezieht sich auf einen Drehsteller für elektrische oder elektronische Geräte in einem Kraftfahrzeug mit einem gegenüber feststehenden Gehäuseteilen manuell drehbar antreibbaren Stellelement, durch das ein ringartiges Rastkonturelement mit einer alternierend Rasterhebungen und Rastvertiefungen aufweisenden Rastkontur drehbar antreibbar ist, in die ein Rastelement mit federnder Vorspannung eingreift.

Derartige Drehsteller werden im Kraftfahrzeug insbesondere für eine menügeführte Steuerung mit einer Vielzahl an Funktionen angewandt. Einer Bedienperson wird dabei eine haptische Rückmeldung über den jeweiligen Bedienzustand gegeben.

Aufgabe der Erfindung ist es einen Drehsteller der eingangs genannten Art zu schaffen, der bei einfachem Aufbau zu einem deutlich unterschiedlichen Rastgefühl für die unterschiedlichen Funktionen führt.

Diese Aufgabe wird erfindungsgemäß dadurch gelöst, dass zwei oder mehrere drehbar antreibbare ringartige Rastkonturelemente vorhanden sind, in deren Rastkonturen die Rastelemente eingreifen, wobei die Rastkonturelemente über ein oder mehrere schaltbare Getriebe abhängig von der Schaltstellung des Getriebes drehbar antreibbar sind.

Entsprechend der jeweiligen Schaltstellung des Getriebes wird durch die unterschiedliche Übersetzung eine eindeutig unterschiedliche Rastcharakteristik erzeugt.

Dies ist sogar bei gleicher Rastschrittweite für die unterschiedlichen Rastkonturelemente möglich.

Es ist aber auch möglich, dass die Rastkonturelemente am Umfang ihrer Rastkonturen mit unterschiedlichen Anzahlen an Rasterhebungen und Rastvertiefungen versehen sind.

Eine Ausbildungsmöglichkeit des Getriebes besteht darin, dass das schaltbare Getriebe ein Umlaufgetriebe ist.

Vorzugsweise ist dabei das Umlaufgetriebe ein Planetengetriebe mit einem durch das Stellelement drehbar antreibbaren Sonnenrad, einem durch eine erste Blockiereinrichtung drehblockierbaren Planetenräder tragenden Planetenträger und einem durch eine zweite Blockiereinrichtung drehblockierbaren Hohlrad, wobei das Hohlrad mit einer ersten radial umlaufenden Rastkontur, in die ein oder mehrere erste Rastelemente eingreifen, und der Planetenträger mit einer zweiten radial umlaufenden Rastkontur, in die ein oder mehrere zweite Rastelemente eingreifen, ausgebildet ist.

Die unterschiedliche Rastcharakteristik wird dabei dadurch erzeugt, dass entweder der Planetenträger blockiert und das Hohlrad frei drehbar oder aber der Planententräger frei drehbar und das Hohlrad blockiert ist.

Die Rastelemente können radial verschiebbar geführte federbelastete Rastnocken sein.

Zu einer größeren Leichtgängigkeit beim Drehen des Stellelementes führt es, wenn die Rastelemente radial bewegbare, drehbare Rastrollen sind.

Zur leichtgängigen Radialbewegung und gleichzeitig definierten Drehlagerung können dabei die Rastrollen an radial verschiebbar geführten Schiebern drehbar gelagert sein.

In einfacher Weise wird eine radiale Federbelastung dadurch erreicht, dass die Rastnocken oder die Schieber von Druckfedern, insbesondere von Schraubendruckfedern in die Rastkontur eingreifend beaufschlagt sind.

Eine Möglichkeit zur Ausbildung der Blockiereinrichtungen besteht darin, dass die erste Blockiereinrichtung und/oder die zweite Blockiereinrichtung als Reibungsbremsen ausgebildet sind, durch die ein erstes Bremselement gegen eine radial umlaufende erste Bremsfläche des Planetenträgers und/oder ein zweites Bremselement gegen eine zweite radial umlaufende Bremsfläche des Hohlrades bewegbar beaufschlagbar ist.

Es ist aber auch möglich, dass die erste Blockiereinrichtung und/oder die zweite Blockiereinrichtung Blockierelemente aufweisen, die formschlüssig in am Umfang insbesondere gleichmäßig verteilt angeordnete Ausnehmungen des Planetenträgers und/oder des Hohlrades eingreifbar sind.

In einer Bauteile und Bauraum sparenden Ausbildung können in Doppelfunktion die Rastelemente und die Blockierelemente einteilige Rast-Blockierelemente sein, die in die erste Rastkontur und/oder die zweite Rastkontur eingreifbar sind.

Zu einer weiteren Bauteil und Bauraum sparenden Ausbildung führt es, wenn die der ersten Rastkontur zugeordneten ersten Rast-Blockierelemente und die der zweiten Rastkontur zugeordneten zweiten Rast-Blockierelemente von einem gemeinsamen Stellelement beaufschlagbar sind, wobei in einer ersten Stellposition von dem Stellelement die ersten Rast-Blockierelemente in ihrer in die erste Rastkontur eingreifenden Blockierstellung blockiert und die zweiten Rast-Blockierelemente federnd in die zweite Rastkontur einrastbar sind und wobei in einer zweiten Stellposition von dem Stellelement die zweiten Rast-Blockierelemente in ihrer in die zweite Rastkontur eingreifenden Blockierstellung blockiert und die ersten Rast-Blockierelemente federnd in die erste Rastkontur einrastbar sind.

Dazu kann das Stellelement ein um eine Schwenkachse schwenkbarer Schwenkhebel sein, der einen Betätigungsarm und einen ersten Blockierarm sowie einen zweiten Blockierarm aufweist, wobei der erste Blockierarm in der ersten Stellposition das erste Rast-Blockierelement blockierend hintergreift und wobei der zweite Blockierarm in der zweiten Schwenkstellung das zweite Rast-Blockierelement blockierend hintergreift.

Vorzugsweise sind die erste Blockiereinrichtung und/oder die zweite Blockiereinrichtung von einem Aktuator betätigbar, der ein elektromagnetischer oder ein elektromotorischer oder ein piezoelektrischer Aktuator sein kann.

Ausführungsbeispiele der Erfindung sind in der Zeichnung dargestellt und werden im Folgenden näher beschrieben. Es zeigen
- Figur 1: eine perspektivische Seitenansicht eines ersten Ausführungsbeispiels eines Drehstellers,
- Figur 2: eine perspektivische Seitenansicht des Drehstellers nach Figur 1 im Teilschnitt,
- Figur 3: eine perspektivische Explosionsdarstellung des Drehstellers nach Figur 1 im Teilschnitt,
- Figur 4: eine weitere perspektivische Explosionsdarstellung des Drehstellers nach Figur 1 im Teilschnitt,
- Figur 5: eine perspektivische Obenansicht eines Ausschnitts eines zweiten Ausführungsbeispiels eines Drehstellers in einer ersten Stellposition,
- Figur 6: eine perspektivische Obenansicht eines Ausschnitts des Drehstellers nach Figur 5 in einer zweiten Stellposition,
- Figur 7: eine perspektivische Untenansicht des Drehstellers nach Figur 5 in einer zweiten Stellposition,
- Figur 8: eine perspektivische Untenansicht des Drehstellers nach Figur 5 in einer ersten Stellposition,
- Figur 9: eine perspektivische Ansicht eines Stellelements des Drehstellers nach Figur 5,
- Figur 10: eine weitere perspektivische Ansicht des Stellelements nach Figur 5,
- Figur 11: eine perspektivische Ansicht des Drehstellers nach Figur 1 mit einer Sperrklinke in Neutralposition,
- Figur 12: eine perspektivische Ansicht des Drehstellers nach Figur 11 mit der Sperrklinke in linker Sperrposition und
- Figur 13: eine perspektivische Ansicht des Drehstellers nach Figur 11 mit der Sperrklinke in rechter Sperrposition.

Die dargestellten Drehsteller besitzen ein manuell antreibbares Stellelement 1, das in einem Ring 2 drehbar gelagert ist.

Dabei besteht das Stellelement 1 aus einem Drehknopf 3 und einer koaxial damit fest verbundenen Hülse 4, die einen flanschartig radial nach außen hervorstehenden Zahnkranz 5 aufweist.

Auf der dem Drehknopf 3 axial entgegengesetzten Seite ist die Hülse 4 drehfest mit einem Sonnenrad 6 eines Planetengetriebes verbunden.

Gleichmäßig am Umfang verteilt greifen radial nach innen vier Planetenräder 7 in die Zähne des Sonnenrades 6 ein, die radic al nach außen in Zähne eines mit dem Ring 2 verbundenen und die Planetenräder 7 umschließenden Hohlrades 8 eingreifen.

Die Planetenräder 7 sind axial an der einen Stirnseite eines ringförmigen Planetenträgers 9 auf Lagerzapfen 12 drehbar gelagert, an dessen den Planetenrädern 7 abgewandter Stirnseite ein Ringansatz 10 mit einer ersten radial umlaufenden Rastkontur 11 aus alternierenden Rasterhebungen und Rastvertiefungen angeordnet ist.

An seiner äußeren radial umlaufenden Ringkontur ist das Hohlrad 8 mit einer zweiten umlaufenden Rastkontur 13 aus Rasterhebungen und Rastvertiefungen versehen.

Radial zur ersten Rastkontur 11 ist in einer ersten Führungsbohrung 14 eines feststehenden Bauteils 18 ein zylindrischer erster Schieber 15 bewegbar geführt, an dessen der ersten Rastkontur 11 zugewandtem Ende eine erste Rastrolle 16 frei drehbar angeordnet ist.

Durch eine an einem Boden der ersten Führungsbohrung 14 mit ihrem einen Ende abgestützte vorgespannte erste Schraubendruckfeder 17 wird der erste Schieber 15 und mit ihm die erste Rastrolle 16 gegen die erste Rastkontur 13 beaufschlagt.

In gleicher Weise ist in einem weiteren feststehenden Bauteil 19 radial zur zweiten Rastkontur 13 eine zweite Führungsbohrung 20 ausgebildet, in der ein zweiter Schieber 21 bewegbar ist, an dessen der zweiten Rastkontur 13 zugewandtem Ende eine zweite Rastrolle 22 frei drehbar gelagert ist.

Durch ein an einem Boden der zweiten Führungsbohrung 20 mit ihrem einen Ende abgestützte vorgespannte zweite Schraubendruckfeder 23 wird der zweite Schieber 21 und mit ihm die zweite Rastrolle 22 gegen die zweite Rastkontur 13 beaufschlagt.

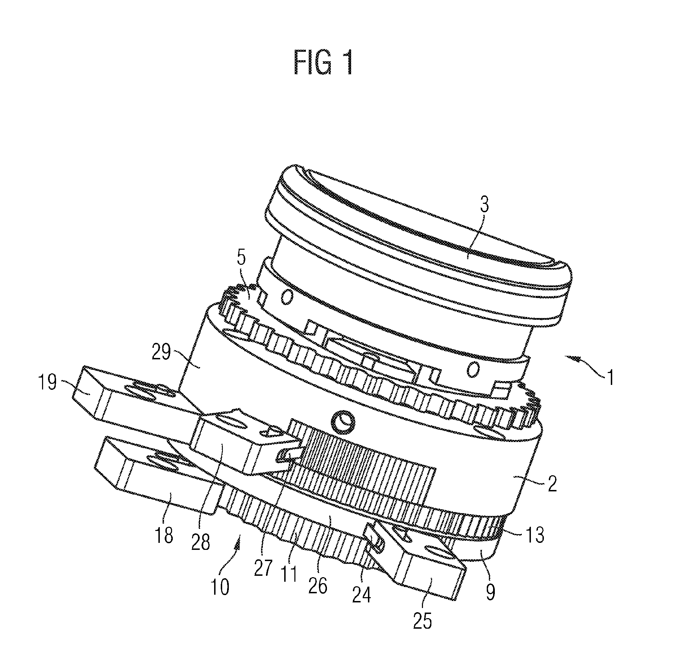

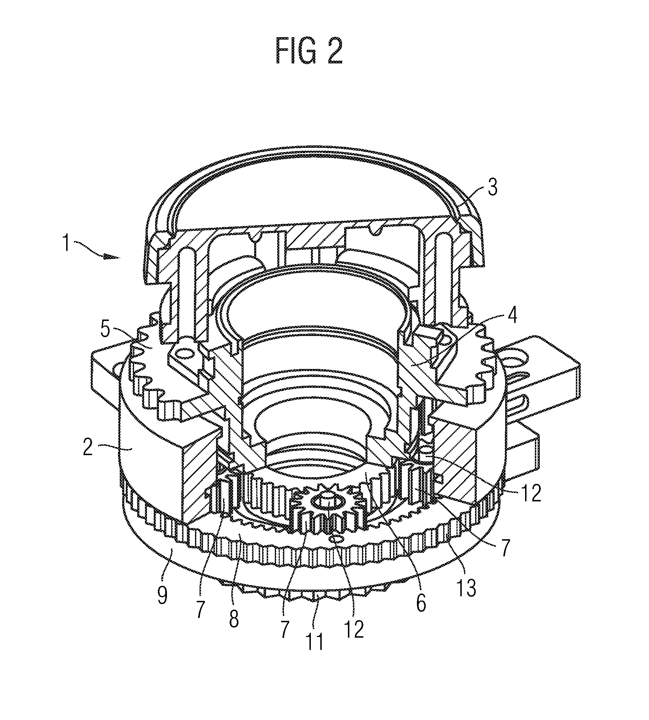

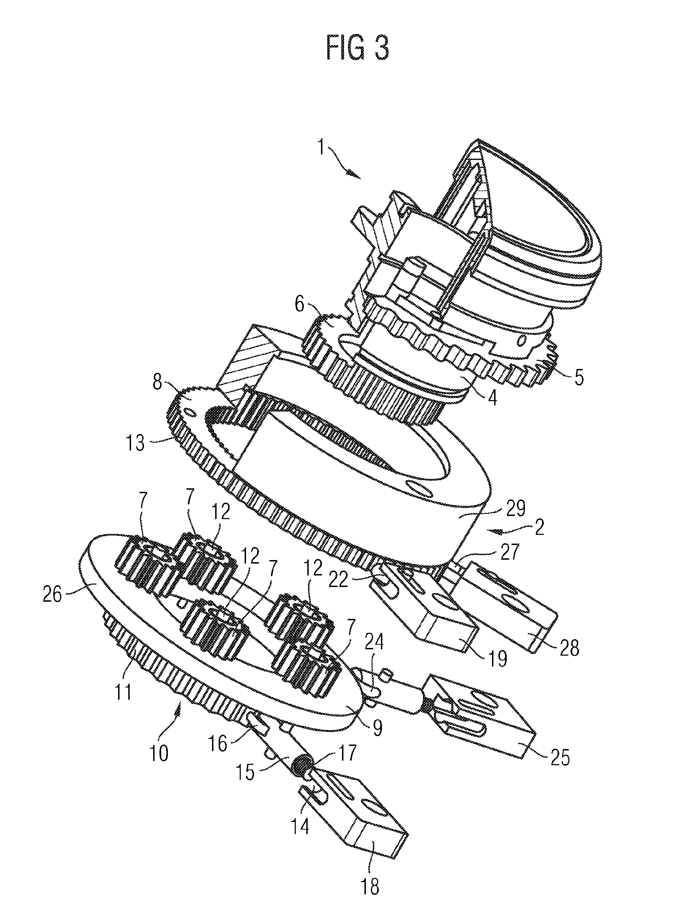

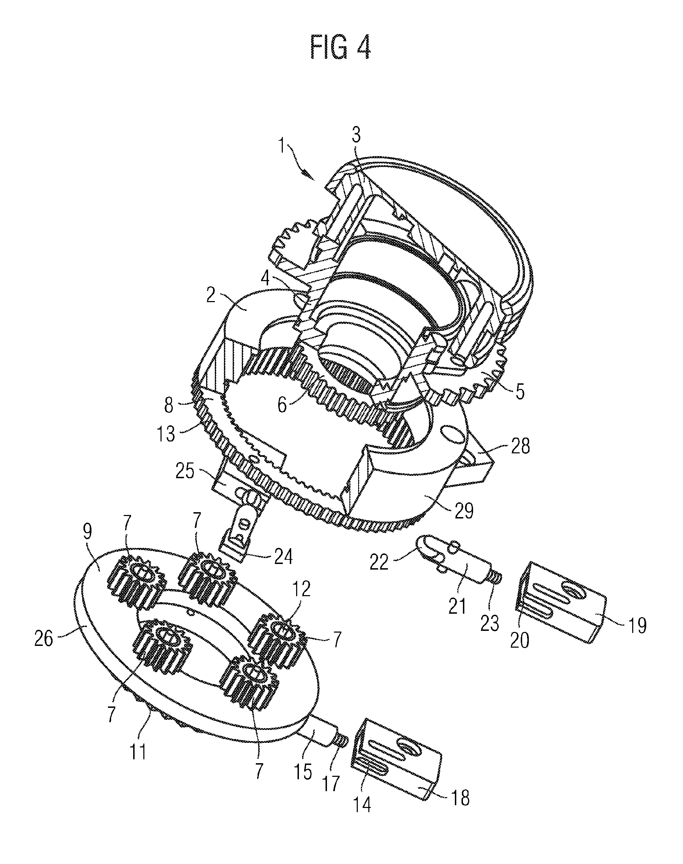

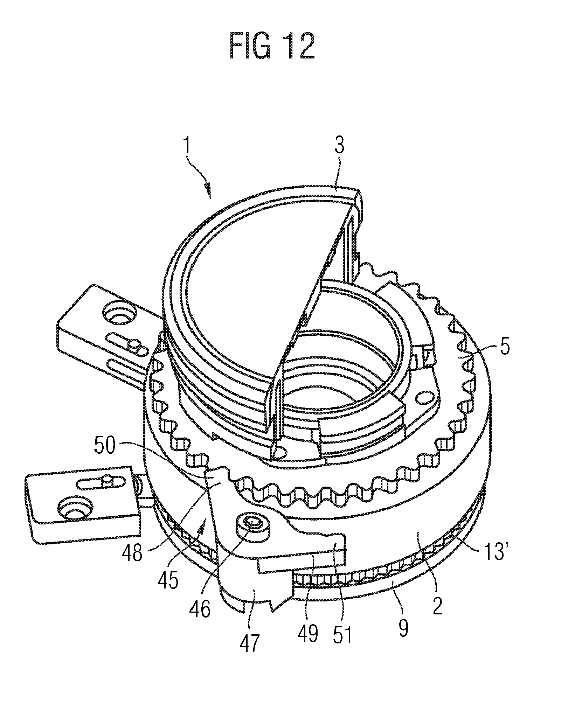

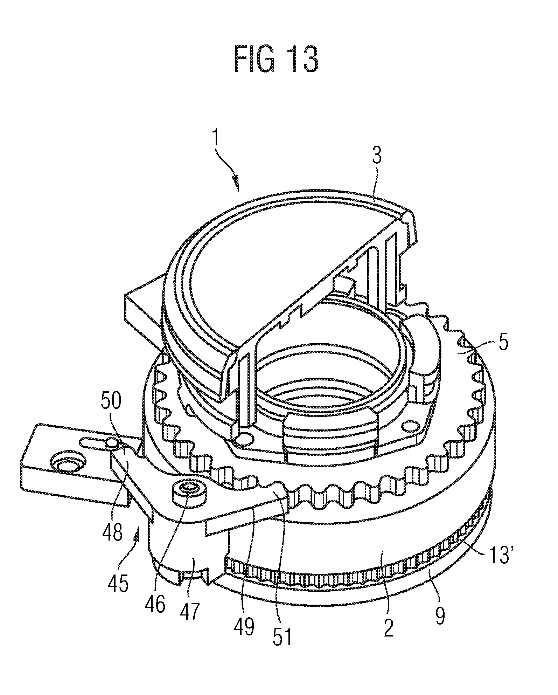

Bei dem Ausführungsbeispiel der Figuren 1 bis 4 und 11 bis 13 ist radial zum Planetenträger 9 bewegbar ein als Reibbelag ausgebildetes erstes Bremselement 24 in einem ersten Führungsgehäuse 25 angeordnet. Durch eine in dem ersten Führungsgehäuse 25 angeordnete erste Stelleinheit ist das erste Bremselement 24 zwischen einer von der eine erste Bremsfläche 26 bildenden, radial umlaufenden äußeren Ringfläche des Planetenträgers 9 abgehobenen Stellung und einer mit Vorspannung an der ersten Bremsfläche 26 anliegenden Blockierstellung bewegbar antreibbar.

In der Blockierstellung wird dadurch der Planetenträger 9 an einer Drehung gehindert.

In gleicher Weise ist radial zum Ring 2 bewegbar ein als Reibbelag ausgebildetes zweites Bremselement 27 in einem zweiten Führungsgehäuse 28 angeordnet. Durch eine in dem zweiten Führungsgehäuse 28 angeordnete zweite Stelleinheit ist das zweite Bremselement 27 zwischen einer von der eine zweite Bremsfläche 29 bildenden radial umlaufenden äußeren Ringfläche des Rings 2 abgehobenen Stellung und einer mit Vorspannung an der zweiten Bremsfläche 29 anliegenden Blockierstellung bewegbar antreibbar.

In der Blockierstellung wird mit dem Ring 2 auch das Hohlrad 8 an einer Drehung gehindert.

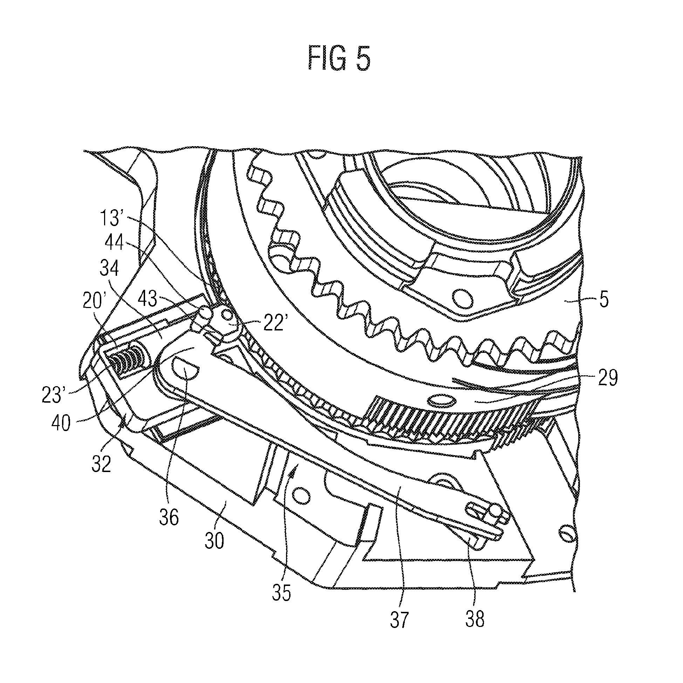

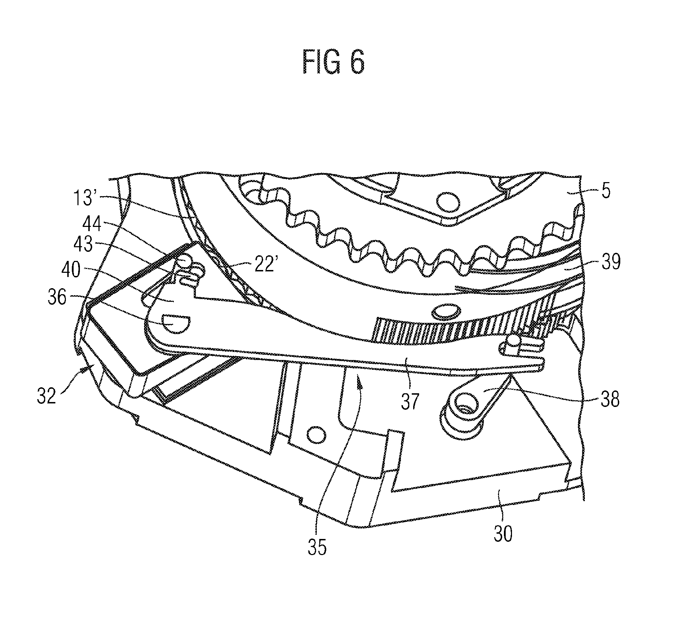

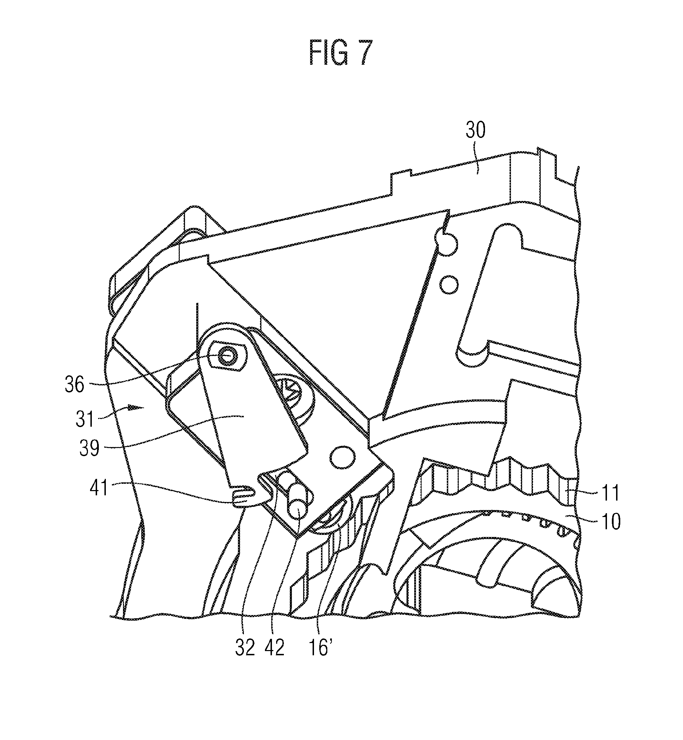

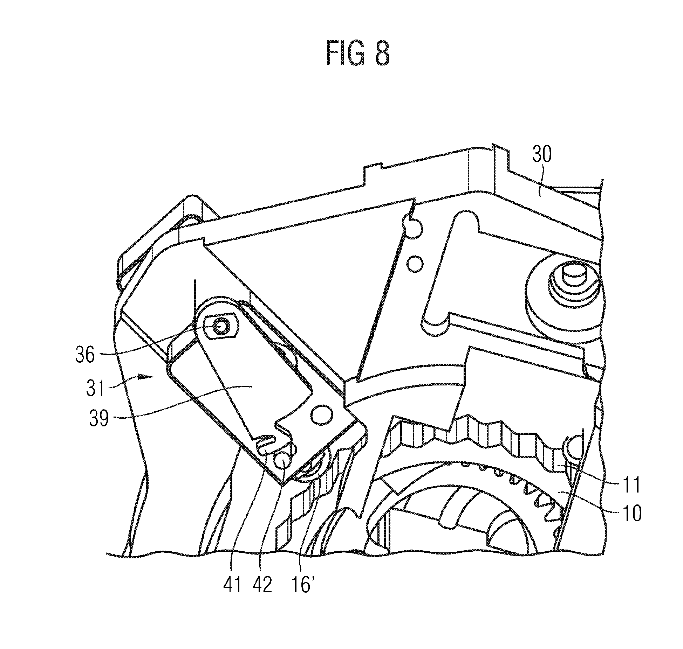

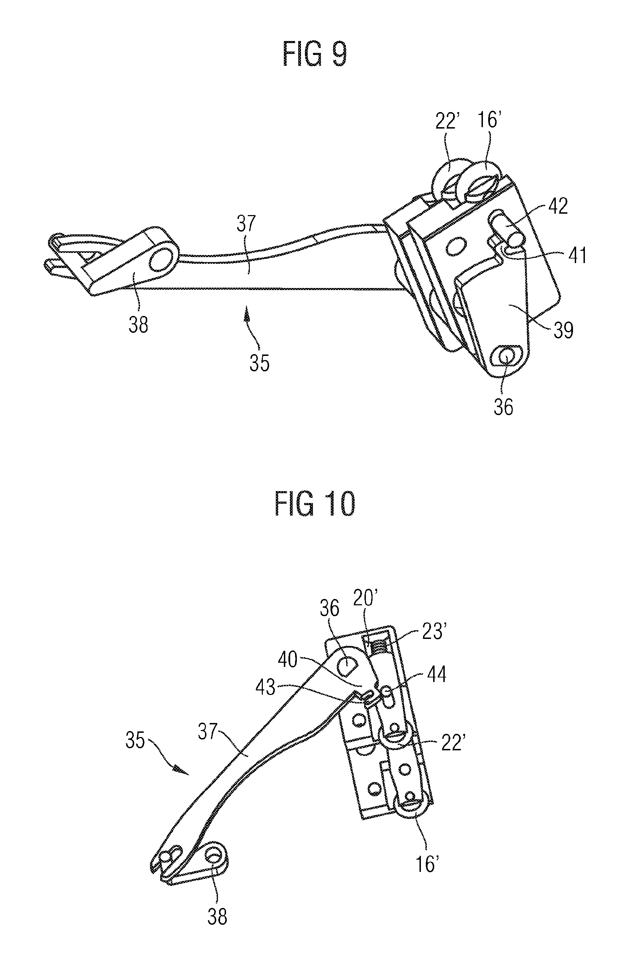

Bei dem Ausführungsbeispiel der Figuren 5 bis 10 ist an einem feststehenden Gehäuse 30 eine erste Führungseinheit 31 in der Ebene der ersten Rastkontur 11' und eine zweite Führungseinheit in der Ebene der zweiten Rastkontur 13' angeordnet.

Die erste Führungseinheit 31 weist eine radial zur ersten Rastkontur 11' gerichtete erste Führungsbohrung 14' auf, in der ein zylinderartiges erstes Rast-Blockierelement 33 verschiebbar angeordnet ist, das an seinem der ersten Rastkontur 11' zugewandten Ende eine erste Rastrolle 16' frei drehbar trägt.

Durch eine an einem Boden der ersten Führungsbohrung 14' mit ihrem einen Ende abgestützte vorgespannte erste Schraubendruckfeder 17' wird das erste Rad-Blockierelement 33 gegen die erste Rastkontur 13' beaufschlagt.

In gleicher Weise weist die zweite Führungseinheit 32 eine zur zweiten Rastkontur 13' gerichtete zweite Führungsbohrung 20' auf, in der ein zylinderartiges zweites Rast-Blockierelement 34 verschiebbar angeordnet ist, das an seinem der zweiten Rastkontur 13' zugewandten Ende eine zweite Rastrolle 22' frei drehbar trägt.

Durch eine an einem Boden der zweiten Führungsbohrung 20' mit ihrem einen Ende abgestützte, vorgespannte zweite Schraubendruckfeder 23' wird das zweite Rast-Blockierelement 34 gegen die zweite Rastkontur 13' beaufschlagt.

Ein Schwenkhebel 35 eines Stellelements ist zwischen einer ersten Stellposition und einer zweiten Stellposition um eine zur Drehachse des Drehknopfes 3 parallele Schwenkachse 36 schwenkbar. Dazu ist ein Betätigungsarm 37 des Schwenkhebels 35 von einem Stellelement 38 eines Aktuators beaufschlagbar.

Der Schwenkhebel 35 besitzt weiterhin einen ersten Blockierarm 39 und einen zweiten Blockierarm 40, wobei durch den ersten Blockierarm 39 in der ersten Stellposition des Schwenkhebels 36 eine erste Blockiernase 41 einen sich quer zur Bewegungsrichtung des ersten Rast-Blockierelements 33 erstreckender erster Zapfen 42 des ersten Rast-Blockierelements 33 hintergriffen ist.

Dadurch wird das erste Rast-Blockierelement 33 in seiner in eine Rastvertiefung der ersten Rastkontur 11' eingerasteten Stellung blockiert und der Planetenträger 7 an einer Drehung gehindert.

In dieser ersten Stellposition ist das zweite Rast-Blockierelement 34 entgegen der Kraft der zweiten Schraubendruckfeder 23' verschiebbar, so dass das Hohlrad 8 drehbar bleibt.

Durch den zweiten Blockierarm 40 wird in der zweiten Stellposition des Schwenkhebels 36 von einer zweiten Blockiernase 43 ein sich quer zur Bewegungsrichtung des zweiten Rast-Blockierelements 34 erstreckender zweiter Zapfen 44 des zweiten Rast-Blockierelements 34 hintergriffen, wodurch das zweite Rast-Blockierelement 34 in seiner in eine Rastvertiefung der zweiten Rastkontur 13' eingerasteten Stellung blockiert und das Hohlrad 8 an einer Drehung gehindert ist.

Bei jedem der Ausführungsbeispiele werden durch Verdrehen des Drehknopfes 3 über das Sonnenrad 6 die in ihrer Position feststehenden Planetenräder 7 drehend angetrieben und treiben wiederum das Hohlrad 8 an.

Dabei kommt es zu einem Rasten der ersten Rastrolle 16, 16' an den Rasterhebungen und Rastvertiefungen der ersten Rastkontur 11, 11' mit einer bestimmten ersten Rastcharakteristik, was von der Bedienperson haptisch erfasst und entsprechend zugeordnet werden kann.

Wird das Hohlrad 8 drehblockiert und der Drehknopf 3 gedreht, so werden über das Sonnenrad 6 die Planetenräder 7 entlang der Zahnung des Hohlrades 8 bewegt, was zu einer Drehung des Planetenträgers 9 führt.

Dabei kommt es zu einem Rasten der zweiten Rastrolle 22, 22' an den Rasterhebungen und Rastvertiefungen der zweiten Rastkontur 13, 13' mit einer von der ersten Rastcharakteristik deutlich unterschiedlichen zweiten Rastcharakteristik, die von der Bedienperson haptisch erfasst und entsprechend zugeordnet werden kann.

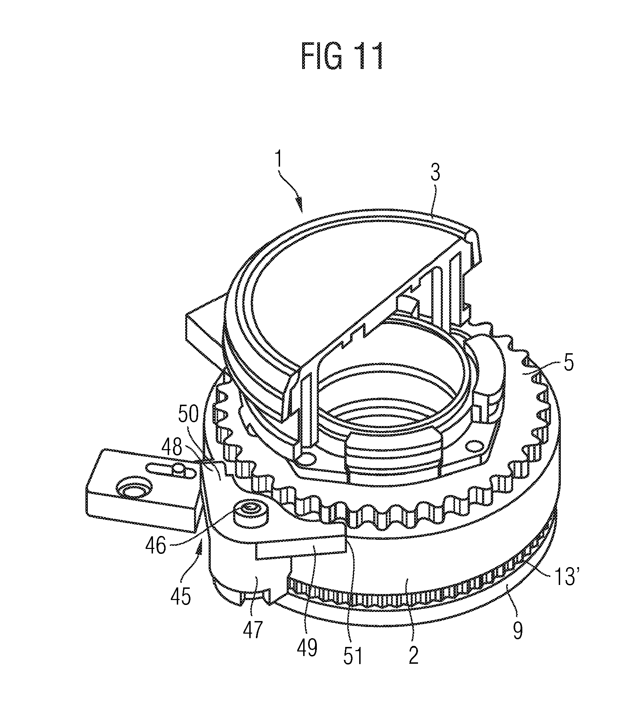

Wie in den Figuren 11 bis 13 dargestellt ist, ist in der Ebene des Zahnkranzes 5 eine zweiarmige Sperrklinke 45 um eine zur Drehachse des Drehknopfes 3 parallel Achse 46 von einem durch eine nicht dargestellte Steuereinheit ansteuerbaren Sperrklinkenantrieb 47 in drei verschiedene Positionen einstellbar.

Die beiden Klinkenarme 48 und 49 erstrecken sich unter einem flachen Winkel etwa parallel zur Umfangskontur des Zahnkranzes 5 von der Achse 46 aus gegenläufig weg und besitzen an ihren freien Enden Klinkennocken 50 und 51, die in ihrer Kontur der Kontur der Zahnlücken des Zahnkranzes 5 entsprechen und in diese Zahnlücken eingreifen können.

In der in Figur 11 dargestellten Neutralposition der Sperrklinke 45 befinden sich beide Klinkennocken 50 und 51 außer Eingriff von dem Zahnkranz 5, so dass der Drehknopf 3 und mit ihm der Zahnkranz 5 frei in beide Drehrichtungen gedreht werden kann.

Wird der Sperrklinkenantrieb 4 zur Sperrung einer Drehung des Drehknopfes 3 entgegen dem Uhrzeigersinn angesteuert, so wird die Sperrklinke 45 mit ihrer ersten Klinkennocke 50 in eine Zahnlücke des Zahnkranzes 5 eingreifend verschwenkt.

Damit liegt der ersten Klinkenarm 48 mit seiner Stirnseite an einer Flanke der Zahnlücke an und blockiert eine Drehung des Zahnkranzes 5 entgegen dem Uhrzeigersinn.

Eine Drehung im Uhrzeigersinn ist aber möglich, da der Sperrklinkenantrieb 47 die Schwenkbewegung über eine Freilaufkupplung überträgt, die bei eingerasteter erster Klinkennocke 50 durch eine Drehung des Drehknopfes 3 im Uhrzeigersinn angesteuert wird.

Dadurch kann der erste Klinkenarm 48 in Ausrastrichtung verschwenken.

Bei einer Ansteuerung des Sperrklinkenantriebs 47 zur Sperrung einer Drehung des Drehknopfes 3 im Uhrzeigersinn wird die Sperrklinke 45 mit ihrer zweiten Klinkennocke 51 in eine Zahnlücke des Zahnkranzes 5 eingreifend verschwenkt.

Damit liegt der zweite Klinkenarm 49 mit seiner Stirnseite an einer Flanke der Zahnlücke an und blockiert eine Drehung des Zahnkranzes 5 im Uhrzeigersinn.

Auch hier ist eine Drehung entgegen dem Uhrzeigersinn möglich, da der Sperrklinkenantrieb 47 die Schwenkbewegung über die Freilaufkupplung überträgt, die bei eingerasteter zweiter Klinkennocke 51 durch eine Drehung des Drehknopfes 3 entgegen dem Uhrzeigersinn angesteuert wird, so dass der zweite Klinkenarm 49 in Ausrastrichtung verschwenken kann.

Durch eine Ansteuerung des Sperrklinkenantriebs 47 und einem Einrasten der ersten Klinkennocke 50 oder der zweiten Klinkennocke 51 in den Zahnkranz 5 werden für bestimmte Drehpositionen des Drehknopfes 3 Endanschläge erzeugt, die entsprechend der Ansteuerung variabel sind.

Damit kann z.B. bei Erreichen einer bestimmten Position eines Auswahlmenüs des elektrischen oder elektronischen Geräts die Drehbewegung begrenzt werden.

## Patentansprüche

1. Drehsteller für elektrische oder elektronische Geräte in einem Kraftfahrzeug mit einem gegenüber feststehenden Gehäuseteilen manuell drehbar antreibbaren Stellelement, durch das ein ringartiges Rastkonturelement mit einer alternierend Rasterhebungen und Rastvertiefungen aufweisenden Rastkontur drehbar antreibbar ist, in die ein Rastelement mit federnder Vorspannung eingreift, **dadurch gekennzeichnet , dass** zwei oder mehrere drehbar antreibbare ringartige Rastkonturelemente vorhanden sind, in deren Rastkonturen (11, 11', 13, 13') die Rastelemente eingreifen, wobei die Rastkonturelemente über ein oder mehrere schaltbare Getriebe abhängig von der Schaltstellung des Getriebes drehbar antreibbar sind.

2. Drehsteller nach Anspruch 1, **dadurch gekennzeichnet, dass** die Rastkonturelemente am Umfang ihrer Rastkonturen (11, 11', 13, 13') mit unterschiedlichen Anzahlen an Rasterhebungen und Rastvertiefungen versehen sind.

3. Drehsteller nach einem der vorhergehenden Ansprüche,
**dadurch gekennzeichnet, dass** das schaltbare Getriebe ein Umlaufgetriebe ist.

4. Drehsteller nach Anspruch 3, **dadurch gekennzeichnet, dass** das Umlaufgetriebe ein Planetengetriebe mit einem durch das Stellelement drehbar antreibbaren Sonnenrad (6), einem durch eine erste Blockiereinrichtung drehblockierbaren Planetenräder (7) tragenden Planetenträger (9) und einem durch eine zweite Blockiereinrichtung drehblockierbaren Hohlrad (8), wobei das Hohlrad (8) mit einer ersten radial umlaufenden Rastkontur (11, 11'), in die ein oder mehrere erste Rastelemente eingreifen, und der Planetenträger (9) mit einer zweiten radial umlaufenden Rastkontur (13, 13'), in die ein oder mehrere zweite Rastelemente eingreifen, ausgebildet ist.

5. Drehsteller nach einem der vorhergehenden Ansprüche, **dadurch gekennzeichnet, dass** die Rastelemente radial verschiebbar geführte federbelastete Rastnocken sind.

6. Drehsteller nach einem der Ansprüche 1 bis 4, **dadur chgekennzeichnet , dass** die Rastelemente radial bewegbare, drehbare Rastrollen (16, 16', 22, 22') sind.

7. Drehsteller nach Anspruch 6, **dadurch gekennzeichnet, dass** die Rastrollen (16, 16') an radial verschiebbar geführten Schiebern (15, 21) drehbar gelagert sind.

8. Drehsteller nach einem der Ansprüche 5 und 7, **dadurch gekennzeichnet, dass** die Rastnocken oder die Schieber (15, 21) von Druckfedern, insbesondere von Schraubendruckfedern (20, 23) in die Rastkontur (11, 13) eingreifend beaufschlagt sind.

9. Drehsteller nach einem der vorhergehenden Ansprüche, **dadurch gekennzeichnet, dass** die erste Blockiereinrichtung und/oder die zweite Blockiereinrichtung als Reibungsbremsen ausgebildet sind, durch die ein erstes Bremselement (24) gegen eine radial umlaufende erste Bremsfläche (26) des Planetenträgers (9) und/oder ein zweites Bremselement (27) gegen eine zweite radial umlaufende Bremsfläche (29) des Hohlrades (8) bewegbar beaufschlagbar ist.

10. Drehsteller nach einem der Ansprüche 1 bis 8, **dadurch gekennzeichnet, dass** die erste Blockiereinrichtung und/oder die zweite Blockiereinrichtung Blockierelemente aufweisen, die formschlüssig in am Umfang insbesondere gleichmäßig verteilt angeordnete Ausnehmungen des Planetenträgers und/oder des Hohlrades eingreifbar sind.

11. Drehsteller nach Anspruch 10, **dadurch gekennzeichnet, dass** die Rastelemente und die Blockierelemente einteilige Rast-Blockierelemente (33, 34) sind, die in die erste Rastkontur (11') und/oder die zweite Rastkontur (13') eingreifbar sind.

12. Drehsteller nach Anspruch 11, **dadurch gekennzeichnet, dass** die der ersten Rastkontur (11') zugeordneten ersten Rast-Blockierelemente (33) und die der zweiten Rastkontur (13') zugeordneten zweiten Rast-Blockierelemente (34) von einem gemeinsamen Stellelement (38) beaufschlagbar sind, wobei in einer ersten Stellposition von dem Stellelement (38) die ersten Rast-Blockierelemente (33) in ihrer in die erste Rastkontur (11') eingreifenden Blockierstellung blockiert und die zweiten Rast-Blockierelemente (34) federnd in die zweite Rastkontur (13') einrastbar sind und wobei in einer zweiten Stellposition von dem Stellelement (38) die zweiten Rast-Blockierelemente (34) in ihrer in die zweite Rastkontur (13') eingreifenden Blockierstellung blockiert und die ersten Rast-Blockierelemente (33) federnd in die erste Rastkontur (11') einrastbar sind.

13. Drehsteller nach Anspruch 12, **dadurch gekennzeichnet, dass** das Stellelement (38) ein um eine Schwenkachse (36) schwenkbarer Schwenkhebel (35) ist, der einen Betätigungsarm (37) und einen ersten Blockierarm (39) sowie einen zweiten Blockierarm (40) aufweist, wobei der erste Blockierarm (39) in der ersten Stellposition das erste Rast-Blockierelement (33) blockierend hintergreift und wobei der zweite Blockierarm (40) in der zweiten Schwenkstellung das zweite Rast-Blockierelement (34) blockierend hintergreift.

14. Drehsteller nach einem der Ansprüche, **dadurch gekennzeichnet, dass** die erste Blockiereinrichtung und/oder die zweite Blockiereinrichtung von einem Aktuator betätigbar sind.

15. Drehsteller nach Anspruch 14, **dadurch gekennzeichnet, dass** der Aktuator ein elektromagnetischer oder ein elektromotorischer oder ein piezoelektrischer Aktuator ist.
